# EUROPEAN PATENT APPLICATION

(11) **EP 1 715 211 A1**
(43) Date of publication of application: **25.10.2006**
(21) Application number: 06112787.4
(22) Date of filing: 20.04.2006
(51) Int. Cl.: F16D 55/226

(54) **Radially mounted brake caliper**

(30) Priority: 21.04.2005 US 110774
(71) Applicant: Bendix Commercial Vehicle Systems, LLC, Elyria, Ohio 44035 (US)
(72) Inventor: Brown, Michael, Battle Creek, OH 49014 (US); Banks, Daniel, Grand Rapids, MI 49512 (US); Hendershot, Jay Alan, Schoolcraft, MI 49087 (US); Plantan, Ronald S., Westlake, OH 44145 (US)
(74) Representative: Dantz, Jan Henning

(57) **Abstract**

A pneumatically- or electrically-actuated disk brake, in particular a pneumatic disk brake for commercial vehicles, in which a mounting frame (20) which supports the brake caliper (12), and a torque plate (30) which secures the mounting frame (20) to the a vehicle axle, are arranged such that the fasteners (32) securing the mounting frame (20) to the torque plate (30) are oriented in at least one plane that is essentially perpendicular to a longitudinal axis (33) of the axle.

## Description

### BACKGROUND AND SUMMARY OF THE INVENTION

The present invention relates to disk brakes, and in particular to a mounting system for a brake caliper frame assembly of an air disk brake.

Pneumatically-operated disc brakes have been undergoing development and deployment, particularly on commercial vehicles, since at least the 1970's. These disk brakes are beginning to replace drum-style brakes due to advantages in areas such as cooling, fade resistance and serviceability. German patent publication DE 40 32 886 A1, and in particular Fig. 1 of this document, discloses an example of such an air disc brake.

The adaptation of disc brake technology to commercial vehicle applications has not been without engineering challenges. Commercial vehicle wheel rims are sized, both in diameter and axial offset, to provide adequate clearance for the drum-type brakes historically employed on such vehicles. The resulting space envelope between the wheel and its axle is limited, leaving little space available for a pneumatic disc brake. This lack of available space in turn results in the need to design the brake components, such as mounting flanges (also known as "torque plates"), to conform to the constrained space envelope and avoid interference with nearby vehicle components, such as an immediately adjacent axle flange.

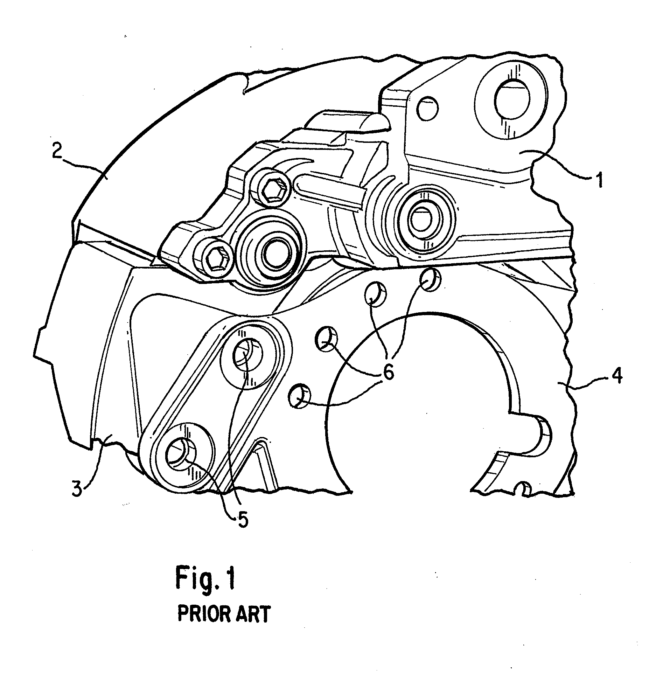

Previous pneumatic disk brake designs typically use a brake caliper which straddles a friction portion of brake disk located on an axle hub. The brake caliper is in such brakes is mounted to an intermediate mounting frame, which in turn is affixed to a mounting plate (known as a "torque plate") which transfers the braking torque generated by the caliper to the vehicle axle. An example of such prior art brake arrangements is shown in Fig. 1, which is a detailed partial view showing the arrangement of a caliper 1 located at either caliper end by pins 2 (second pin not shown) on mounting frame 3. The caliper mounting frame 3 is held to torque plate 4 by bolts (not illustrated) which pass through torque plate holes 5 and thread into corresponding threaded holes in the mounting frame 3. The torque plate may be affixed to the axle in various ways, such as welding to the axle housing, however, the most common approach is bolting of the torque plate through holes 6 to an axle flange which is perpendicular to the axle longitudinal axis (flange not illustrated for clarity).

There are several disadvantages to the previous caliper mounting frame arrangements, many of which stem from the configuration of the frame mounting bolts, which are generally parallel to longitudinal axis of the axle. The previous designs require installation tool clearance behind the torque plate to permit insertion and/or removal of the frame mounting bolts and insertion of an installation tool to tighten and/or loosen the bolts. Achieving sufficient clearance for frame mounting bolt installation and/or removal is problematic due to the close proximity of other vehicle components, such as the axle housing, axle flanges, vehicle suspension (e.g., leaf springs and brackets, shock absorbers and mounts), and steering components (e.g., tie rod ends, and arms, steering arm). These space constraining components frequently require the disk brake caliper and its mounting frame to be "clocked" (rotated about the longitudinal axis of the axle) away from an optimum brake performance position, in order to avoid interference with other vehicle components during brake operation or service. Even with clocking of the brake to a sub-optimum position about the axle, access to at least one of the mounting frame bolts usually remains limited, preventing the use of time- and labor-saving power tools (e.g., a pneumatic wrench) during bolt installation and removal.

Further disadvantages of the previous mounting bolt arrangements result from the need to include excess additional material to certain portions of the caliper mounting frame and torque plate, which can lead to compromising the strength of these components in order to fit the disk brake into the available space envelope.

For example, because the frame mounting bolts are parallel to the longitudinal axis of the axle, and must be threaded into the mounting frame (in order to minimize bolt projection from the torque plate toward the longitudinal center of the axle), a significant amount of extra frame material must be provided around the mounting bolt holes to support the bolt threads. Given its location at the extreme ends of the caliper mounting frame, this extra frame material does not improve the structural strength of the mounting frame, and thus only adds to the weight of the frame.

Further, in order to provide sufficient material about the mounting bolt holes to ensure sufficient bolt thread engagement in the mounting frame, the mounting frame ends typically are so thick that the portion of the torque plate containing the mounting frame mounting bolt holes must be offset away from the brake disk so that there is enough room between the disk and the torque plate to accommodate the enlarged mounting frame ends. As a result of the offset, thin-walled sections are created in the torque plate in the transition regions between the offset mounting bolt holes and the center portion of the plate that is bolted to the axle flange. These thin-walled sections are highly stressed, and past practice has been to added additional material in adjoining areas of the torque plate to reduce the stress concentration in the thin-walled sections. This additional material, resulting from the longitudinal mounting frame mounting bolt orientation, is an additional inefficient use of structural material, further increasing brake weight and cost.

It is an objective of the present invention to provide an improved pneumatic disk brake and mounting components which address one or more of the foregoing problems with previous pneumatic brake mounting approaches with a lighter, simpler, less costly and/or easier to assemble and service caliper mounting system. This obejctive is achieved by the subject matter of claims 1, 4, 8 and 11. Preferred embodiments are the subject matter of the subclaims.

The present invention provides a brake caliper mounting frame and a corresponding torque plate which eliminates the need for excess material to be provided at the ends of the intermediate mounting frame, eliminates the need to provide an offset in the mounting hole portion of the torque plate, minimizes or eliminates the need to "clock" the brake assembly away from an optimal angular position about the longitudinal axis of the axle, and greatly increases the serviceability of the brake.

Unlike previous pneumatic disk brakes, the caliper mounting frame and corresponding torque plate are arranged such that the mounting bolts are oriented in one or more planes which are generally perpendicular to the longitudinal axis of the vehicle axle. As a result, the frame mounting bolts may be inserted, for example, radially inward through the top of the mounting frame into threads in the torque plate, or radially outward through holes in a torque plate flange into threads in the mounting frame.

The mounting frame mounting bolts and holes may be oriented radially away from the longitudinal axis of the axle, or may be arranged in a perpendicular plane, but oriented in a generally tangential direction. It is not necessary for the frame mounting bolts to be located in the same plane, or even to share the same plane with another mounting bolt; nor is it necessary that the planes be exactly perpendicular to the axle longitudinal axis, as long as the individual bolts have a generally radial or tangential orientation which permits their insertion and/or removal without substantial interference from other vehicle components in the axle longitudinal direction.

Because this arrangement permits the bolt-thread-supporting material of the mounting frame and/or the torque plate to be oriented in an perpendicular orientation relative to the axle, the width of the mounting frame/torque plate assembly is minimized, and excess, non-structural material previously needed to support longitudinal bolt threads can be eliminated, reducing overall brake weight and cost. The reduced lateral width also minimizes potential interference with other vehicle components, allowing a designer greater freedom in "clocking" the brake caliper assembly closer to an optimal orientation about the axle.

The reduced lateral extent of the mounting frame and torque plate assembly further reduces, or entirely eliminates, the need to offset the torque plate's frame mounting bolt flange, thereby increasing clearance to other vehicle components and reducing or eliminating unnecessary additional material previously required to reinforce the thin-walled portions of offset torque plates. the need to allows greatly improved access to installation and/or removal of the frame mounting bolts. Moreover, if the threaded holes receiving the mounting bolts are located in the torque plate, the relatively tall radial height of the torque plate permits the use of longer bolts and threaded holes, increasing thread engagement and further lowering stresses in the threads and the surrounding structures. The threaded holes, whether located in the torque plate or the caliper mounting frame, may also be constructed as blind holes, which advantageously reduce potential for environmental contamination of the threads, thread corrosion, and potential bolt seizing to the threads.

A further advantage of the present invention is the greatly increased serviceability of the brakes. The placement of the mounting frame mounting bolts in the generally perpendicular orientation removes the bolt heads from the highly obstructed area inboard of the axle flange, and places them in locations which are immediately accessible to technicians assembling or servicing the disk brake. In addition, by placing the bolt heads in much more accessible locations above or below the frame/torque plate flanges, the technician is provided with sufficient clearance allow use of high speed, labor-saving power tools for mounting bolt installation and/or removal.

An additional advantage of orienting the mounting bolts in a radial and/or tangential manner is that the designer is provided additional freedom in defining the interface between the mounting frame and torque plate flanges. In previous pneumatic disk brakes, due to the longitudinal orientation of the mounting bolts and the limited immediately adjacent space, the mounting frame flange which mated against the corresponding torque plate flange containing the mounting bolt holes had to be perpendicular to the axle. With the present invention, the designer can arrange the mounting frame/torque plate interface flanges in essentially any desired orientation, for example, in one or more planes parallel to the longitudinal axis of the axle. Exemplary embodiments include orienting the mounting flange/torque plate interfaces at each end of the mounting frame in a straight line or, alternatively, disposing the interface surfaces generally radially perpendicular to the axle, such that the interface surfaces at the opposite ends of the mounting frame form an angle which helps accommodate nominal clearance differences between the mounting frame and the torque plate. Like the frame mounting bolts, the interface surfaces between the mounting frame and torque plate flanges need not lie in precisely parallel planes, but may be angled away from a parallel orientation as long as the mounting bolts may be installed and/or removed without substantial interference from other vehicle components in the axle longitudinal direction

The present invention thus provides a lighter, less expensive, stronger, and more easily assembled and serviced pneumatic disk brake than previously available in prior pneumatic disk brakes with longitudinally-secured caliper mounting frames.

Other objects, advantages and novel features of the present invention will become apparent from the following detailed description of the invention when considered in conjunction with the accompanying drawings.

### BRIEF DESCRIPTION OF THE DRAWINGS

Figure 1 is a oblique partial view of a prior art pneumatic disk brake caliper and mounting assembly.

Figure 2 is an elevation view looking outward from a vehicle axle center of an embodiment of a pneumatic disk brake in accordance with the present invention.

Figure 3 is view looking radially outward from the vehicle axle of an underside of the embodiment of a pneumatic disk brake shown in Fig. 2.

Figure 4 is an exploded elevation view of the embodiment of a pneumatic disk brake shown in Figs. 2 and 3.

Figure 5 is an oblique view looking outward from a vehicle axle center of another embodiment of a pneumatic disk brake in accordance with the present invention.

Figure 6 is an oblique view of the mounting frame and torque plate arrangements of the embodiment of a pneumatic disk brake shown in Fig. 5.

Figure 7 is an exploded elevation view of the mounting frame and torque plate arrangements of the embodiment of a pneumatic disk brake shown in Fig. 6.

### DETAILED DESCRIPTION OF THE DRAWINGS

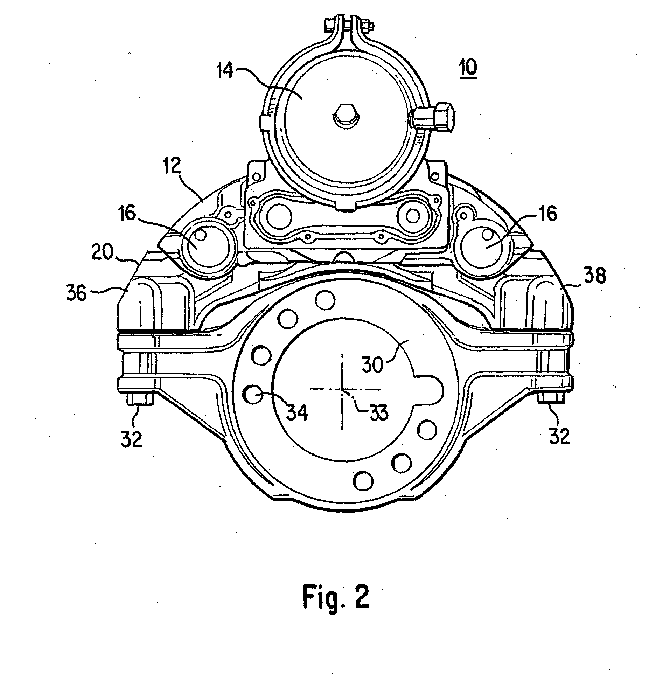

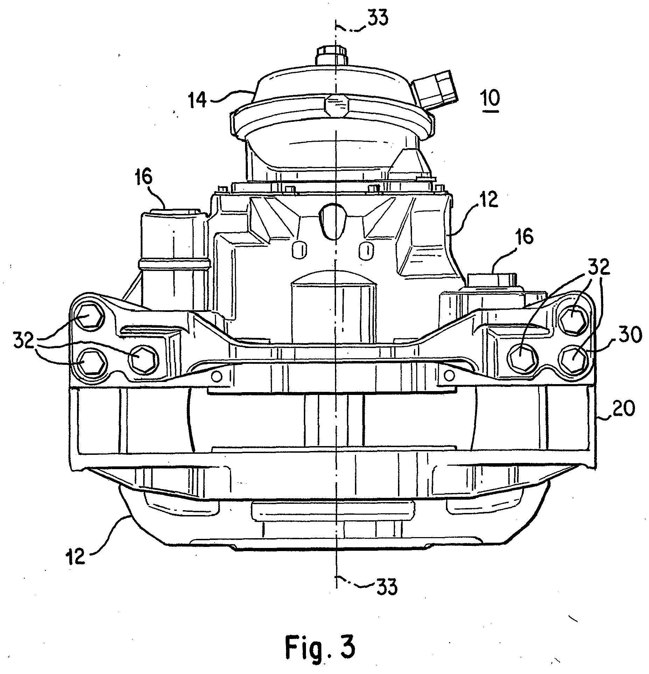

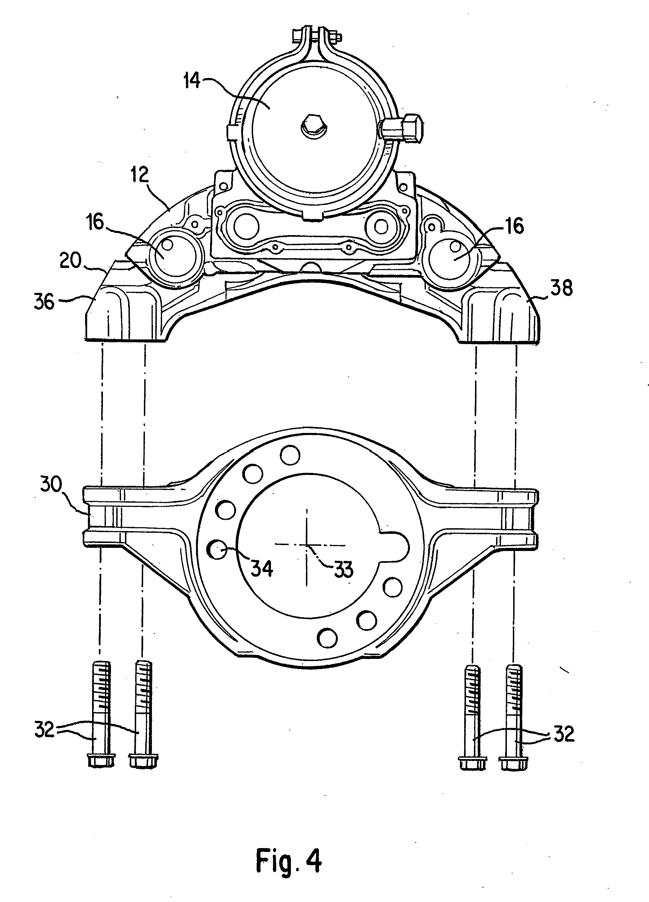

Figure 2 is an elevation view looking outward of a first embodiment of a pneumatic disk brake caliper assembly 10 in accordance with the present invention. Additional views of this embodiment are presented in Figs. 3 and 4.

In this embodiment, a disk brake caliper 12, with a pneumatic brake actuator 14 mounted thereon, is mounted via pins (located beneath seal covers 16) to a caliper mounting frame 20. Those of ordinary skill in the art will recognize that while the present invention is described herein as including a disk brake caliper with a pneumatic brake actuator, an electric brake actuator may be readily substituted for the pneumatic brake actuator, and such an electrically-actuated brake would be within the scope of the present invention.

The caliper mounting frame 20 is located in this embodiment on a torque plate 30, and secured by frame mounting bolts 32. As shown in Fig. 3, there are a plurality of mounting bolts 32 at each end of the mounting frame 20, and in this embodiment, some, but not all, the bolts are aligned in a single plane perpendicular to the longitudinal axis of the axle 33. The torque plate 30 is configured to be located concentrically about a hub end of a vehicle axle (not illustrated), and secured to an axle flange (not illustrated) by bolts passing through holes 34.

As will be evident to those of ordinary skill in the art. the mounting bolts 32 securing the caliper mounting frame 20 to the torque plate 30 are located sufficiently far away from the longitudinal axis of the axle 33 that when disk brake caliper assembly 10 is located on an axle and the associated wheel has been removed, a technician will have essentially unfettered access to the mounting bolts 32 to permit their rapid removal and installation, preferably with pneumatic tools to minimize the effort and time required for the service operation.

A further feature of this first embodiment is the location of the threaded holes which receive the frame mounting bolts in the opposing ends 36, 38 of the mounting frame 20. Due to the vertical (i.e., non-longitudinal) orientation of the mounting bolts 32, the threaded holes in the frame for receiving the mounting bolts are not constrained in length by immediately adjacent vehicle components, such as the axle flange or suspension components. In this embodiment, the length of the threaded holes is essentially unlimited, up to the point where the inner circumference of an enveloping wheel rim is reached. As shown in Figs. 2 and 4, the space available for the threaded holes is sufficient to allow the holes to be blind holes, thus isolating the bolt end threads from environmental contamination. Also shown in these figures is the concentration of structural material about the threaded holes in the ends of mounting frame 36, 38, without unnecessary material needing to be included to support short, highly stressed longitudinally-mounted frame mounting bolts.

One of ordinary skill will also recognize that access to the mounting bolts 32 may be enhanced by slightly tilting the caliper mounting frame 20/torque plate 30 mounting flanges, for example, such that they are aligned closer to a radial direction from the axle. This alternative arrangement would result in the heads of the mounting bolts 32 pointing further away from the axle, further increasing the working space available to a technician.

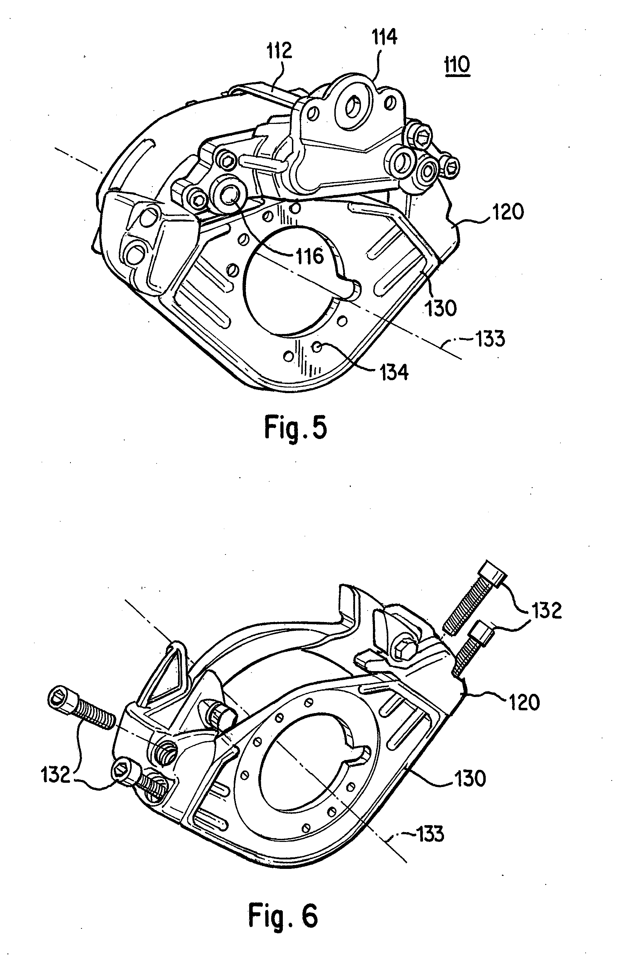

A further embodiment of the present invention is shown Figs. 5-7. In this embodiment, rather than locating the threaded holes which receive the mounting bolts in the mounting frame, the threaded holes are located in the torque plate such that the mounting bolts may be inserted and/or removed from the disk brake caliper assembly from an outer periphery of the assembly.

In Fig. 5, pneumatic disk brake caliper assembly 110 includes a disk brake caliper 112, with a brake actuator receiving flange 114 for mounting a pneumatic or electric brake actuator thereto (not illustrated). As with ed thereon, is mounted by pins (located beneath seal covers 116) to the caliper mounting frame 120.

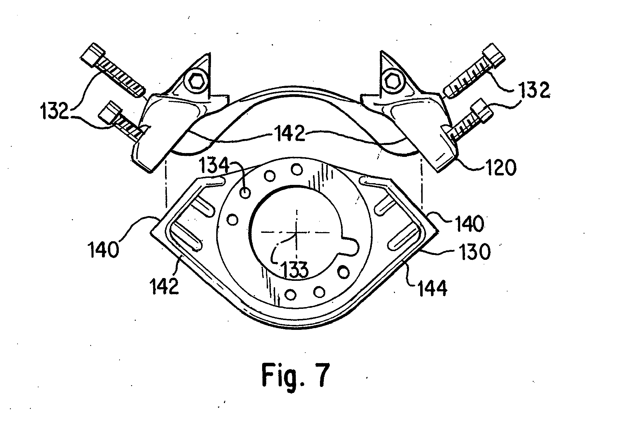

The caliper mounting frame 120 is located on a torque plate 130, and secured by frame mounting bolts 132. As shown in Figs. 6 and 7, there are a plurality of mounting bolts 132 at each end of the mounting frame 120. In this embodiment, the bolts are aligned in a single plane perpendicular to the longitudinal axis of the axle 133. The torque plate 130 is configured to be located concentrically about a hub end of a vehicle axle (not illustrated), and secured to an axle flange (not illustrated) by bolts passing through holes 134.

As with the first embodiment, because the torque plate does not need to be offset from its corresponding axle flange (not illustrated), no highly-stressed thin-walled sections are created in the plate, and thus no excess structural material needs to be added to reinforce the plate. Rather, because the mounting flanges between the torque plate and the mounting frame, flanges 140 and 142, respectively (Fig. 7), are rotated approximately 90 degrees from the prior art longitudinally-oriented torque plate/mounting frame flanges, the structural material needed for the torque plate flanges 140 can be concentrated and minimized at the outer periphery of the torque plate, further minimizing brake assembly weight and materials cost.

An additional benefit of the generally radially-oriented mounting bolts 132 in this embodiment is the relatively large distance available in the torque plate 130 in which to accommodate threaded holes for the frame mounting bolts 132. As shown in the figures, and in Fig. 7 in particular, additional material is only provided in torque plate 140 in the areas 142, 144 where the mounting bolt threaded holes extend radially into torque plate 130. Because the amount of additional material needed to accommodate the threaded holes in relatively minimal, the raised material bosses in areas 142, 144 are of only minimal height, precluding any potential interference with immediately adjacent vehicle components, minimizing the amount of material required to produce a structurally sound torque plate, and allowing a brake designer greater freedom to "clock" the brake caliper assembly toward a preferred orientation without vehicle component interference.

Like the first embodiment, the radial orientation of the threaded holes allows for the holes to be formed as blind holes, and to be made long enough to receive mounting bolts of sufficient length to keep thread stresses low.

To and even greater extent that with the first embodiment, because the mounting bolts 132 securing the caliper mounting frame 120 to the torque plate 130 are facing outward from the mounting frame, there is virtually unlimited access for installation and/or removal of the bolts once the vehicle wheel is removed.

A further advantage of the present invention illustrated in this embodiment is that by arranging the corresponding pairs of torque plate and mounting frame flanges 140, 142 at an angle relative to one another, the torque plate and mounting frame may be made self-aligning in on least two axes, as well as capable of accommodating nominal variances in clearance between these components.

The foregoing disclosure has been set forth merely to illustrate the invention and is not intended to be limiting. For example, the orientation of the frame mounting bolts may be considerably varied between radial and tangential orientations about the axle, or even tilted slightly away from planes perpendicular to the axle longitudinal axis, as suits a particular axle or vehicle arrangement, as long as the mounting bolts and their receiving threaded holes do not have extend so far along the axle longitudinal direction as to create interference with immediately adjacent vehicle components. Because other such modifications of the disclosed embodiments incorporating the spirit and substance of the invention may occur to persons skilled in the art, the invention should be construed to include everything within the scope of the appended claims and equivalents thereof.

## Claims

1. A caliper assembly of a pneumatically- or electrically-actuated disk brake, comprising:
a pneumatically- or electrically-actuated brake caliper;
a caliper mounting frame; and
a torque plate;
wherein,
the caliper is secured to the mounting frame,
the caliper mounting frame is secured to the torque plate by a plurality of fasteners,
the torque plate is configured to be secured to a vehicle axle, and
at least one of the fasteners is oriented with its longitudinal axis in a plane essentially perpendicular to a longitudinal axis of the vehicle axle when the caliper assembly is in an in use position.

2. The caliper assembly of claim 1, wherein the plurality of fasteners pass through holes in the mounting frame into receiving holes in the torque plate.

3. The caliper assembly of claim 1, wherein the plurality of fasteners pass through holes in the torque plate into receiving holes in the mounting frame.

4. A mount for a caliper of a pneumatically- or electrically-actuated disk brake, comprising:
a mounting frame configured to support the caliper thereon,
wherein, when in an in use position, the mounting frame is secured to a vehicle axle by a plurality of fasteners, and at least one of the fasteners is oriented with its longitudinal axis in a plane essentially perpendicular to a longitudinal axis of the vehicle axle.

5. The caliper mount of claim 4, wherein, when in the in use position, the mounting frame secured by the plurality of fasteners to a torque plate mounted on the axle.

6. The caliper mount of claim 5, wherein, when in the in use position, the plurality of fasteners pass through holes in the mounting frame into receiving holes in the torque plate.

7. The caliper mount of claim 5, wherein, when in the in use position, the mounting frame receives the plurality of fasteners after the fasteners pass through holes in the torque plate.

8. A mount for a caliper of a pneumatically- or electrically-actuated disk brake, comprising:
a torque plate configured to support a caliper mounting frame thereon,
wherein, when in an in use position,
the torque plate is secured to a vehicle axle,
the caliper mounting frame is secured to the torque plate by a plurality of fasteners, and
at least one of the fasteners is oriented with its longitudinal axis in a plane essentially perpendicular to a longitudinal axis of the vehicle axle.

9. The caliper mount of claim 8, wherein, when in the in use position, the torque plate receives the plurality of fasteners after the fasteners pass through holes in the mounting frame.

10. The caliper mount of claim 8, wherein, when in the in use position, the plurality of fasteners pass through holes in the torque plate into receiving holes in the mounting frame.

11. A pneumatically- or electrically-actuated disk brake, comprising:
a brake disk;
a pneumatically- or electrically-actuated brake caliper which straddles the brake disk when in an in use position;
a caliper mounting frame; and
a torque plate;
wherein,
the caliper is secured to the mounting frame,
the caliper mounting frame is secured to the torque plate by a plurality of fasteners,
the torque plate is configured to be secured to a vehicle axle, and
at least one of the fasteners is oriented with its longitudinal axis in a plane essentially perpendicular to a longitudinal axis of the vehicle axle when the caliper is in the in use position.

12. The disk brake of claim 11, wherein the plurality of fasteners pass through holes in the mounting frame into receiving holes in the torque plate.

13. The disk brake of claim 11, wherein the plurality of fasteners pass through holes in the torque plate into receiving holes in the mounting frame.
